# EUROPÄISCHE PATENTANMELDUNG

(11) **EP 1 800 768 A1**
(43) Veröffentlichungstag der Anmeldung: **27.06.2007**
(21) Anmeldenummer: 06026458.7
(22) Anmeldetag: 20.12.2006
(51) Int. Cl.: B09B 3/00, B65D 65/46

(54) **Verfahren zur Beseitigung von Biomasse**

(30) Priorität: 20.12.2005 DE 102005061233
(71) Anmelder: Firma SBM Maschinen GmbH, 87657 Görisried (DE)
(72) Erfinder:
(74) Vertreter: Pfister, Stefan Helmut Ulrich

(57) **Zusammenfassung**

Die Erfindung betrifft ein Verfahren zur Beseitigung von Biomasse (1) mit folgenden Schritten: Einsammeln von in Behälter (6) verpackter, feuchtigkeitsreduzierter, insbesondere getrockneter Biomasse, Transportieren der Behälter zu einer zentralen Verwertungseinrichtung (12) und Abgeben der Behälter mit der Biomasse an die Verwertungseinrichtung.

## Beschreibung

Die Erfindung bezieht sich auf ein Verfahren zur Beseitigung von Biomasse, einen Behälter zum Sammeln, Transportieren und Verwerten von Biomasse, sowie auf eine Verwendung des Behälters als auch auf ein Entsorgungssystem.

Es ist bekannt Biomasse, die in Haushalten, Küchen, Großküchen, Gaststätten usw. anfällt in speziellen Mülltonnen zu entsorgen, die für Biomüll bzw. -masse bestimmt sind. Solche Mülltonnen werden im Allgemeinen als "braune Tonne" bezeichnet. Solche Tonnen haben Nachteile. Sie stellen eine Brutstätte für Keime und Bakterien dar, es entstehen unangenehme Gerüche, Tiere, wie Mäuse und Ratten werden angezogen, die Krankheiten und Bakterien übertragen können. Fliegen und daraus resultierend Maden sind ebenfalls als Krankheitsüberträger bekannt und werden durch die Biomasse angelockt.

Aus dem Stand der Technik ist ein Verfahren zur energetischen Nutzung von Bioabfällen aus Haushaltungen im Kreislaufsystem bekannt. In dem bekannten Verfahren soll mit organischen Abfallstoffen Energie erzeugt werden, wobei der anfallende Wasserdampf über eine Turbine zur Stromerzeugung dienen soll.

Es ist weiterhin aus dem Stand der Technik ein kompostierbarer Einweg-/Müllbehälter bekannt, der zum Sammeln und vorübergehenden Aufbewahren von im Haushalt oder dergleichen anfallenden kompostierbaren Abfällen geeignet ist.

Es ist weiterhin ein aus verrottbarem Material gebildeter Sack bekannt, der eine Einlage aufweist. Die Einlage dient zum Sammeln von Feuchtigkeit der organischen Abfälle, zu der Sammlung der Sack geeignet sein soll.

Eine weitere Lösung des Standes der Technik schlägt einen Müllbehälter und ein Verfahren zur Aufbereitung von biologischem Speisemüll vor. Der Müllbehälter dient dabei der Aufnahme von biologischem Speisemüll. Der Behälter besteht dabei aus einem dem Speisemüll analogen, wiederverwertbarem Material, wobei der gesamte, mit Speisemüll gefüllte Behälter einer Verwertungsanlage zuführbar ist.

Es ist Aufgabe der Erfindung, ein Verfahren und einen, insbesondere kompostierbaren, Behälter der eingangs genannten Art sowie eine Verwendung für den Behälter als auch Entsorgungssystem bereitzustellen, die zusammen zur Umsetzung eines resourcenschonenden Entsorgungssystems für Bioabfälle mit einem deutlich reduzierten Aufwand und einer geringeren Geruchsentwicklung dienen.

Gelöst wird die Aufgabe hinsichtlich des Verfahrens mit folgenden Schritten:

Einsammeln von in Behälter verpackter, feuchtigkeitsreduzierter, insbesondere getrockneter Biomasse, transportieren der Behälter zu einer zentralen Verwertungseinrichtung, Abgeben der Behälter mit der Biomasse an die Verwertungseinrichtung. Biomasse besteht aus bis zu 90 % Wasser. Durch eine Trocknung der Biomasse reduziert sich diese im Volumen und im Gewicht um etwa den entzogenen Wasserbetrag. Aufgrund eines deutlich reduzierten Wassergehalts in der Biomasse verringert sich die Keimbildung und die Geruchsbildung deutlich, sie werden extrem verlangsamt.

Durch die erfindungsgemäße Lösung wird demnach ein Logistikverfahren zur Verfügung gestellt, das ein Einsammeln von Bioabfällen, insbesondere von Bioabfällen aus kleineren Unternehmen, bei denen nicht so viel Biomasse anfällt, mit geringem Aufwand ermöglicht. Entgegen allen aus dem Stand der Technik bekannten Lösungen geht die Erfindung zu einem völlig neuen Konzept über, nämlich derart, daß das Trocknen bzw. Austrocknen der Biomasse vor dem Transport erfolgt. Damit gelingt es, daß die Transportkosten deutlich reduziert werden, da fast 90 % des Gewichtes jetzt in der getrockneten Biomasse nicht mehr vorhanden sind.

Es ist auch möglich, neue Logistikkonzepte zu entwickeln, wo derartige Abfälle in Form eines "Pick-up-Systems" durch einen Anbieter beispielsweise eingesammelt und zu einer zentralen Verwertungseinrichtung transportiert werden. Im Gegensatz zu den aus dem Stand der Technik bekannten Lösungen wird die Biomasse nur so weit getrocknet, daß sie biologisch inaktiv ist, aber durch eine anschließende Befeuchtung in der Verwertungseinrichtung wieder biologisch aktiv wird. Das bedeutet, daß die in der Biomasse vorhandenen Bakterien durch die Trocknung nicht abgetötet werden. Der bei der späteren Verwertung gewünschte biologische Zersetzungsprozeß kann damit ohne Zugabe von Bakterien auskommen. Die Masse wird nach der Befeuchtung sofort wieder biologisch aktiv. Der besondere Vorteil ist dabei, daß die Behälter, die bei dem erfindungsgemäßen Verfahren zum Einsatz kommen, ebenfalls biologisch zersetzbar und abbaubar sind, so daß der Prozeß in der zentralen Verwertungseinrichtung durch die erfindungsgemäß zur Verfügung gestellte, getrocknete Biomasse deutlich verbessert wird.

Deshalb wird entsprechend einer Weiterbildung bevorzugt die Biomasse in einem Verfahrensschritt vor dem Einsammeln in einer Aufbereitungsvorrichtung über einen einstellbaren, insbesondere längeren Zeitraum getrocknet, wobei eine Trocknung der Biomasse vorliegt, wenn sie circa 10 bis 70 % ihres ursprünglichen Gewichts, vorzugsweise 12 - 40 %, insbesondere bevorzugt 15 - 20 % des ursprünglichen Gewichts aufweist. Dabei ist es erfindungsgemäß insbesondere vorgesehen, daß die Trocknung in dem ersten Verfahrensschritt erfolgt. Die Biomasse wird also praktischerweise vor dem Verpacken in den Behälter getrocknet bzw. feuchtigkeitsreduziert.

Die getrocknete und deshalb im Volumen reduzierte Biomasse läßt sich somit in weitaus konzentrierterer Form in vorzugsweise einem etwas kleineren Behälter als in den herkömmlichen braunen Tonnen sammeln. Die Behälter können beispielsweise kleine handliche Pakete bilden, die von geeigneten Paket- und Abholdiensten abgeholt und zu einer zentralen Verwertungseinrichtung transportiert werden. Ein aufwändiger Lastkraftwagenaufbau für Bioabfälle entfällt, sowie die teuren Transportkosten mittels großen, eigens dafür vorgesehenen Lastkraftwagen.

Eine Weiterbildung des erfindungsgemäßen Verfahrens zeichnet sich dadurch aus, daß die Biomasse solange getrocknet wird, bis sie biologisch inaktiv ist. Dadurch wird erreicht, daß eine Zersetzung und damit unangenehme Geruchsbildung während der Lagerung bis zum Abtransport und beim Abtransport selbst nahezu vollständig vermieden wird.

Die Erfindung schlägt in einer Variante auch vor, daß die Trocknung solange erfolgt, bis eine Zersetzung der Biomasse und eine damit verbundene Brennwertreduktion der Biomasse angehalten oder beinahe angehalten ist. Damit wird erreicht, daß der Brennwert der Biomasse noch entweder vollständig vorhanden, insbesondere nicht wesentlich reduziert ist. Dies führt dazu, daß beim späteren Verwertungsprozeß eine effektivere Verwertung der gesamten Biomasse erfolgt, wodurch zusätzlich Energie gewonnen werden kann.

Alternativ kann die in den Behälter verpackte Biomasse erst im Behälter getrocknet bzw. feuchtigkeitsreduziert werden. Beziehungsweise es könnte der Trocknungsvorgang im Behälter fortgesetzt werden. Ein solcher Trocknungsvorgang im Behälter kann abhängig vom Behältermaterial ein nach dem Stand der Technik bekanntes und/oder später noch zu beschreibendes Verfahren umfassen. Um den Trocknungsprozeß zu beschleunigen und die Biomasse konzentrierter in Behälter abfüllen zu können, wird die Biomasse bevorzugt vor dem Einsammeln in der Aufbereitungsvorrichtung, insbesondere von einer Hammermühle oder einem Mahlwerk, bevorzugt zu einer granulatförmigen Masse zerkleinert.

Praktischerweise ist die Verwertungseinrichtung eine Biogasanlage, so daß die in der Biomasse enthaltene Restenergie verwertet werden kann. Um die Biomasse im Behälter zur besseren Umsetzung in der Verwertungseinrichtung bereit zu stellen, wird die Biomasse vor Abgabe an die Verwertungseinrichtung in einer Schreddereinrichtung geschreddert. Um die Verarbeitung der Biomasse in der Verwertungseinrichtung zu verbessern und zu beschleunigen wird die Biomasse vor oder während der Abgabe an die Verwertungseinrichtung befeuchtet bzw. bewässert.

Erfindungsgemäß ist es vorgesehen, daß eine Transportdiensteinrichtung die getrocknete Biomasse zu der Verwertungseinrichtung transportiert. Als Transportdiensteinrichtung kann dabei beispielsweise ein Paketdienst den Transport zu der Verwertungseinrichtung übernehmen. Dadurch entfallen Aufwendungen, die insbesondere durch die Reduzierung von Transportkosten entstehen. Die getrocknete Biomasse kann jetzt in relativ handlichen Behältern verpackt werden, wodurch diese mit einem Paketdienst transportiert werden können. Des weiteren ist durch die Trocknung die Masse biologisch inaktiv, wodurch eine Geruchsbelästigung nicht zu verzeichnen ist. Dies führt auch dazu, daß erfindungsgemäß die Behälter mit der getrockneten Biomasse durch einen Paketdienst eingesammelt werden können, ohne daß dadurch spätere Transportaufgaben dieses Dienstleisters durch die üblicherweise entstehende Geruchsbelästigung behindert werden können.

Im Gegensatz zu den aus dem Stand der Technik bekannten Lösungen bietet das Verfahren wesentliche Vorteile. So sind zwar Müllbehälter bekannt, in denen Speisemüll oder biologische Abfälle eingesammelt werden. Allerdings sind nach dem Stand der Technik aufwendige Maßnahmen notwendig, um dafür zu sorgen, daß, wenn schon verrottbare Behälter oder zersetzbare Behälter eingesetzt werden, diese zunächst sehr feuchtigkeitsbeständig gestaltet werden müssen. Dazu sind aufwendige Maßnahmen notwendig.

So ist beispielsweise nach einer weiteren im Stand der Technik bekannten Lösung eine Absorbtionsmittelschicht erforderlich. Diese ist entweder als lose Einlage oder als integraler Bestandteil des Sackes bzw. Behälters auszubilden. Dies entfällt nach der erfindungsgemäßen Lösung komplett. Die kompostierbaren Einwegmüllbehälter nach dem Stand der Technik sind zudem nicht mit entsprechenden Abdeckungen versehen, so daß hier die Geruchsbelästigung enorm hoch ist. Das Material der kompostierbaren Einweg-Müllbehälter muß dabei entweder nässeaufnehmende bzw. die Nässe mindestens einige Tage nicht durchlassende Eigenschaften aufweisen. Dieses Problem existiert bei der erfindungsgemäßen Lösung ebenfalls nicht.

Bei einem anderen Verfahren zur energetischen Nutzung von Bioabfällen aus Haushaltungen im Kreislaufsystem wird zunächst durch die Verbrennung von Zellulosefasern, Holzhackschnitzeln, Papier, Pappe, Stroh usw. in einer Verbrennungsanlage die dadurch entstehende Wärme genutzt, um Klärschlamm oder getrocknete Bioabfälle oder Zellulosefaserstoffe zu einem brennbaren Gemisch zu gestalten, um es anschließend in einer Verbrennungsanlage zur Stromerzeugung zu verbrennen. Dieses Verfahren ist dadurch gekennzeichnet, daß es einen sehr hohen Energieaufwand zunächst benötigt, um die Energie dafür zu erzeugen, daß eine Verbrennung der Bioabfälle erfolgen kann. Zudem ist die Verbrennung der Bioabfälle ökologisch nicht die günstigste Lösung. Vielmehr ist die Lösung, wie sie nach dem erfindungsgemäßen Verfahren vorgeschlagen wird, die ökologisch günstigere Variante, da alle in der Biomasse vorhandenen energetischen Potentiale ausgenutzt werden können und anschließend noch eine Kompostierung erfolgen kann, welches ebenalls günstiger ist, weil dadurch wertvolle bodenverbessernde Stoffe entstehen, die dem biologischem Kreislauf wieder zuführbar sind.

Ein weiteres, bekanntes Verfahren zur Aufbereitung von biologischem Speisemüll ist von sehr aufwendigen Verfahrensschritten gekennzeichnet. So ist in dem Stand der Technik beschrieben, daß als Verwertungsanlage eine Flüssigphasen-Eindampfungsvorrichtung vorgesehen ist. Dabei sind aufwendige Brechanlagen zunächst notwendig, um das Material zu zerkleinern. Dann muß das verwertbare Material auf eine Temperatur von 95° C bis 133° C erhitzt werden, wodurch selbstverständlich die biologisch aktiven Bestandteile der Biomasse zerstört werden. Dann erfolgt eine weitere Bearbeitung in einer Verdampfungsanlage und anschließend muß das verbleibende Endprodukt getrocknet werden, um es dann als Futtermittel zu verwenden. Auch hier ist das erfindungsgemäße Verfahren deutlich im Vorteil, weil all die aufwendigen Ver- bzw. Bearbeitungsschritte nun entfallen und die der Verwertungseinrichtung zugeführten Abfallstoffe biologisch und umweltschonend verarbeitet werden können.

Die Aufgabe der Erfindung hinsichtlich des Behälters zum Sammeln, Transportieren und Verwerten von im wesentlichen trockener oder zu trocknender Biomasse wird dadurch gelöst, daß der Behälter eine Verschlußeinrichtung aufweist. Vorteilhaft ist, daß der Sammelbehälter für Biomasse kompostierbar ist und zwar zusammen mit der Biomasse. Somit wird eine Keimbildung zusätzlich verringert. Praktischerweise weist der Behälter eine Befestigungseinrichtung zur Befestigung an einer Aufbereitungsvorrichtung von Biomasse in unmittelbarer Nähe des Entstehungsortes auf.

Um den Behälter mittels einer einfachen Vorrichtung an der Aufbereitungsvorrichtung aufnehmen zu können, umfaßt die Befestigungseinrichtung im Wesentlichen eine rechteckige, flächige Verstärkung, an der der Behälter angeordnet ist. Der Behälter wird mittels seiner rechteckigen, verstärkten Befestigungseinrichtung einfach in ein entsprechendes Gegenstück eingeschoben.

Als Verschlußeinrichtung kann entweder ein verschiebbarer Deckel oder Klappdeckel ausgebildet sein. Eine besonders einfache Verschlußeinrichtung kann auch ein Band sein, das bevorzugt aus einem verrottbaren Material besteht. Bevorzugt ist der Behälter im Wesentlichen aus kompostierbarer Zellulose hergestellt, um zusammen mit getrockneten Biomasse gemeinsam in einer Verwertungseinrichtung verwertet werden zu können. Dies vereinfacht den Verwertungsprozeß und verbessert den ökologischen Kreislauf. Zudem ist Zellulose ein preiswertes Material und die Verarbeitung von Zellulose zu einem Behälter ist aus dem Stand der Technik hinlänglich bekannt.

Alternativ kann der kompostierbare Behälter aus einem biologisch abbaubaren Kunststoff hergestellt sein. Dieser abbaubare biologische Kunststoff ist insbesondere auf Stärkebasis, bevorzugt Maisstärkebasis, hergestellt. Die Stärke kann aber auch beispielsweise aus Weizen und/oder Kartoffeln gewonnen werden. Biologisch abbaubare Kunststoffe sind im Stand der Technik bekannt und können für einen derartigen Behälter eingesetzt werden.

Bevorzugt ist der kompostierbare Behälter zur Aufnahme der Biomasse sackförmig oder quaderförmig ausgebildet. Dadurch kann eine größere Menge von getrocknetem Bioabfall aufgenommen werden, was beispielsweise bei Großküchen oder für kleine und größere Restaurantbetriebe von Vorteil ist. Vorzugsweise weist der Behälter ein Volumen zwischen 1 Liter und 70 Liter, vorzugsweise zwischen 10 und 50 Liter auf. Zweckmäßigerweise umfaßt der kompostierbare Behälter eine Verstärkungslage im Bodenbereich, um die Sicherheit und Dichtheit auch bei stärkerer mechanischer und chemischer Beanspruchung zu gewährleisten.

Ein weiterer Kerngedanke der Erfindung ist es, die Biomasse zur beschleunigten Trocknung und zur effizienteren Raumausnutzung der Behälter die Biomasse zu zerkleinern. Die Zerkleinerung kann vor oder während dem Trocknungsprozess erfolgen.

Vorteilhaft ist, dass für derartige Biomasse die herkömmlichen Abfalltonnen für die Biomasse nicht mehr notwendig sind, sondern kleinere, handlichere Behälter ausreichend sind, die auch leichter mit Paketdiensten zu transportieren sind, so dass eine häufigere Abholung des Bioabfalls möglich ist.

Dadurch, in dem sich der Weg von der Entstehung des Abfalls zur Endverwertung zeitlich verkürzt, wird ein möglicher Verrottungsprozeß beim Abfall-"Erzeuger", d.h. den Haushalten und Gaststätten reduziert. Außerdem, da das Transportgewicht reduziert ist, wird eine deutliche Ressourcenschonung hinsichtlich des Transports von Biomasse, wie oben bereits zum Teil erläutert, erzeugt.

Da praktischerweise in zeitlicher Nähe zum Anfall der Biomasse diese unmittelbar einer zentralen Verwertungseinrichtung zu zugeführt wird, wird somit die Möglichkeit reduziert, dass die getrocknete Biomasse wieder Feuchtigkeit aufnimmt. Zudem verhindert der Behälter, in dem die getrocknete Biomasse gelagert wird, eine zusätzliche Feuchtigkeitsaufnahme.

Die Erfindung sieht ferner die Verwendung eines biologisch abbaubaren Behälters vor, insbesondere mit den oben dargelegten Merkmalen, als Sammelstelle und Transportbehälter für Biomasse. Somit wird ein Behälter als Einwegbehälter für Biomasse verwendet, der die Entstehung von Keimen und Krankheiten reduziert. Insbesondere bezieht sich die Erfindung auf die Verwendung eines biologisch abbaubaren Behälters, bevorzugt befüllt mit Biomasse als Abfallprodukt in einer Verwertungseinrichtung, insbesondere einer Biogasanlage.

Die Aufgabe hinsichtlich des Entsorgungssystems wird dadurch gelöst, daß das Entsorgungssystem eine Aufbereitungsanlage für Biomasse und einen, insbesondere biologisch abbaubaren Behälter aufweist, der insbesondere die oben diskutierten Merkmale aufweist, der für einen Transport der Biomasse von der Aufbereitungsvorrichtung zu einer Verwertungseinrichtung vorgesehen ist. Der Behälter kann entweder ein Mehrwegbehälter sein, der einige male zum Einsatz kommt, bevor er aufgrund von Verschleiß verwertet wird, oder es kann auch ein Einwegbehälter, der insbesondere biologisch abbaubar ist, eingesetzt werden. Bevorzugt weist das Entsorgungssystem eine Aufbereitungsvorrichtung auf, die die Biomasse mittels einer Trocknungsvorrichtung und mit einer Aufbereitungsvorrichtung trocknet.

Praktischerweise sieht die Verwertungseinrichtung eine Biogasanlage vor. Die Verwertungseinrichtung kann in unmittelbarer Nähe zur Aufbereitsvorrichtung angeordnet sein, wenn ein derartig großer Bioabfall regelmäßig anfällt und die Verwertungseinrichtung entsprechend klein und somit preiswert ausgeführt ist. Eine dezentrale Verwertung reduziert die Transportkosten und stellt Energie aus der Verwertungseinrichtung bereit.

Alternativ kann die Verwertungseinrichtung zur Aufbereitungsvorrichtung für die Biomasse räumlich getrennt sein. In einem solchen Fall bezieht die Verwertungseinrichtung aus einer Vielzahl von Aufbereitungsvorrichtungen, über eine Transporteinrichtung getrocknete bzw. im wesentlichen feuchtigkeitsreduzierte Biomasse.

Bevorzugt wird Biomasse in einer Schreddereinrichtung, die im Entsorgungsablauf vor der Verwertungseinrichtung angeordnet ist, geschreddert. Dies verbessert den Wirkungsgrad beziehungsweise die Wirkungsgeschwindigkeit.

Ein solches Entsorgungssystem kann die oben dargestellten Verfahrensansprüche durchführen.

Es versteht sich, dass die vorstehend genannten und nachstehend noch zu erläuternden Merkmale nicht nur in der jeweiligen angegebenen Kombination, sondern auch in anderen Kombinationen verwendbar sind.

Die Erfindung wird im Folgenden anhand zweier Ausführungsbeispiele unter Bezugnahme auf zwei zugehörige Zeichnungen näher erläutert. Es zeigen:
- Fig. 1: ein Ablaufschema eines Verfahrens zur Abfallbeseitigung von Biomasse, und
- Fig. 2: einen Querschnitt eines kompostierbaren Behälters an einer Aufbereitungsvorrichtung für Bioabfälle.

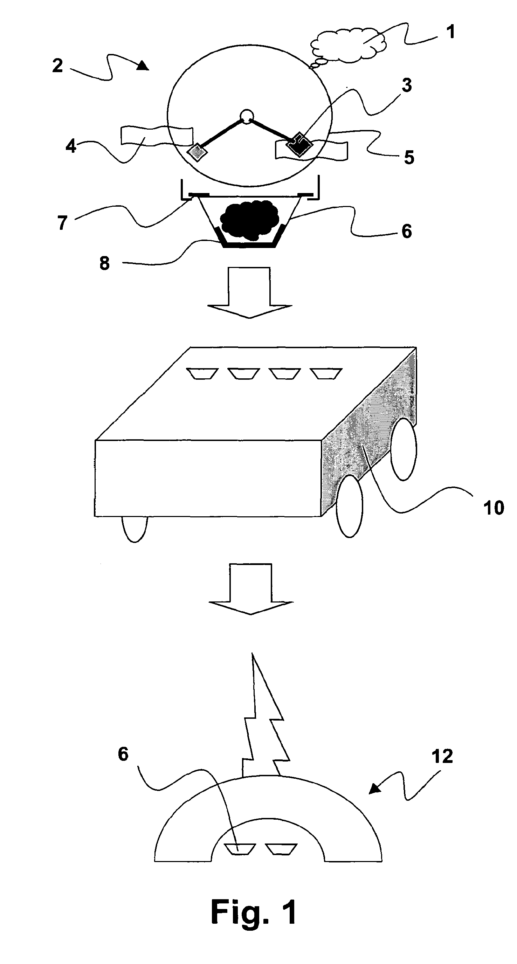

Die Fig. 1 zeigt einen schematischen Ablauf des Verfahrens zur Abfallbeseitigung von Biomassen, insbesondere von Speiseresten, die in Haushalten, Küchen, Großküchen, Gaststätten und Pizzerien usw. anfallen. Biomasse 1, insbesondere Speisereste, wird bzw. werden in eine Vorrichtung 2 zur Aufbereitung von Biomasse, über eine Öffnung in einer Trommel gefüllt. Diese Vorrichtung 2 zur Aufbereitung von Biomasse 1 ist in einer separaten Patentanmeldung DE beschrieben. Die Vorrichtung 2 zur Aufbereitung von Biomasse 1 umfaßt eine Zerkleinerungseinrichtung 3 und eine Trocknungsvorrichtung 4, um die Biomasse 1 zu zerkleinern und zu trocknen. Die Trocknungsvorrichtung 4 kann beispielsweise durch Wärmestrahler, IR-Lampen, Mikrowellen oder ein Warmluftgebläse ausgebildet sein. Die Zerkleinerung erfolgt durch in einer Trommel 5 gelagerte Hämmer.

Nach ausreichender Verarbeitung in der Trommel 5 der Aufbereitungsvorrichtung 2 wird die nun zerkleinerte und getrocknete Biomasse 1 in einen erfindungsgemäßen kompostierbaren Behälter 6 geschüttet, der zweckmäßigerweise unter der Aufbereitungstrommel 5 angeordnet ist. Der kompostierbare Behälter 6 ist in der Fig. 1 trichterförmig dargestellt und weist im oberen Randbereich eine Befestigungseinrichtung 7 auf, die von einer Gegeneinrichtung der Aufbereitungsvorrichtung 2 aufgenommen wird. Die Trommel 5 hat hierzu eine Öffnung zum Befüllen und Entleeren.

Der kompostierbare Behälter 6 ist aus einem biologisch abbaubaren Kunststoff, z.B. einer Stärke-Verbindung hergestellt. Er kann natürlich auch aus verrottbarer Zellulose bzw. einem kartonähnlichen verrottbaren Material hergestellt sein.

Der kompostierbare Behälter 6 weist eine Verstärkungslage 8 im Bereich des Bodens des Behälters 6 auf, um sicherzustellen, dass der Boden auch stärkere mechanische und chemische Belastungen aushält. Der kompostierbare Behälter 6 wird über einen entweder verschiebbaren oder klappbaren Deckel 9 verschlossen, so dass der kompostierbare Behälter 6 die Biomasse 1 gegenüber der Umwelt abdichtet. Da die Biomasse 1 getrocknet und zerkleinert ist, entstehen im kompostierbaren Behälter 6 kaum Fäulnisgerüche.

Der kompostierbare Behälter 6 ist ein handliches paketähnliches Gut, das in regelmäßigen Abständen bzw. je nach Bedarfsanfall von einer Transportdiensteinrichtung 10 eingesammelt wird. Diese Transportdiensteinrichtung 10 kann eigens zum Transportieren der kompostierbaren Behälter 6 vorgesehen sein. Alternativ kann die Transportdiensteinrichtung 10 ein konventioneller Pakettransportdienst sein, der eine zusätzliche Funktion übernimmt, so dass er neben üblichen Transportgütern, wie Paketen und Päckchen, darüber hinaus die kompostierbaren Behälter 6 transportiert. Die Transportdiensteinrichtung 10 führt die kompostierbaren Behälter 6 zu einer zentralen Verwertungseinrichtung 12 und gibt sie an dieser ab. Bei der Verwertungseinrichtung 12 werden die kompostierbaren Behälter 6 mit ihrem Inhalt, das heißt der Biomasse 1 möglichst ökologisch und ökonomisch verwertet, beispielsweise in einer Biogasanlage 12 oder einer anderen aus dem Stand der Technik bekannten Energieverwertungs- bzw. Aufbereitungsanlage, die in der Fig. 1 schematisch skizziert ist.

Aufgrund des vereinfachten Entsorgungssystems werden wertvolle Ressourcen geschont. Es sind keine aufwendigen Lastkraftwagen mit Aufbauten für Bioabfälle 1 notwendig, die eine schwere Biomasse 1 entsorgen müssen. Ein wesentliches Gewicht der Biomasse 1, nämlich Wasser, das in der Biomasse bis zu 90% enthalten ist, wird bereits vor Abgabe an die Transportdiensteinrichtung 10 in der Aufbereitungsvorrichtung 2 im Wesentlichen entzogen. Somit reduzieren sich die Transportkosten, da sich das Volumen des Transportgutes, sowie auch das Gewicht reduziert. Der Transport kann von im Wesentlichen kleineren, kompakteren, kostengünstigeren Lastkraftwagen in Form eines Paketdienstes erfolgen. Aufgrund einer regelmäßigeren bzw. öfteren Entfernung der Bioabfälle aus Haushalten, Küchen usw. reduziert sich auch dort der benötigte Stauraum für Mülltonnen.

Da der Biomasse 1 die Feuchtigkeit entzogen wird, in unmittelbar zeitlicher Nähe zur Entstehung der Bioabfallreste ist eine Bildung von Bakterien und Keimen erschwert. Auch Tiere werden von einer getrockneten Biomasse 1 weniger angezogen.

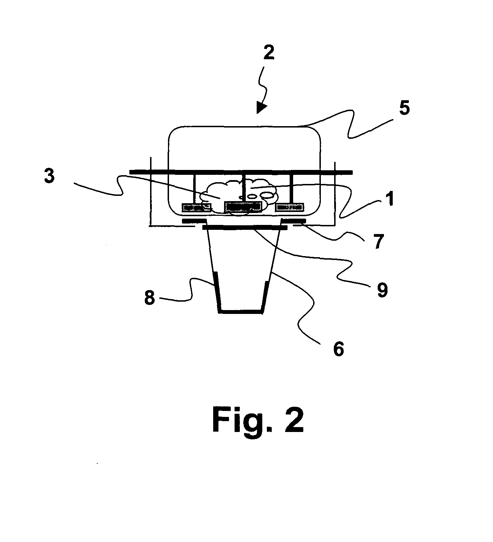

Die Fig. 2 zeigt im Querschnitt den kompostierbaren Behälter 6 unter einer Aufbereitungsvorrichtung 2 für Bioabfälle 1 angeordnet. Der Behälter 6 ist mittels der Befestigungseinrichtung 7 mit der Aufbereitungsvorrichtung 2 verbunden. Die Aufbereitungsvorrichtung 2 umfaßt eine Trommel 5 in der als Zerkleinerungsvorrichtung 3 Hämmer angeordnet sind.

Die Fig. 2 zeigt eine leicht andere Form des kompostierbaren Behälters 6, der auch eine Verstärkungslage 8 aufweist. Dieser kompostierbare Behälter 6 kann mittels einem Band im oberen Öffnungsbereich verschlossen werden. Die an dem Behälter 6 angeordnete Befestigungseinrichtung 7 als rechteckige, flächige Verstärkung weist hierfür Sollknickstellen auf, so dass der Behälter in seiner Öffnung sackähnlich zusammengebunden werden kann. Es versteht sich, dass auch das Verschlußband des Behälters 6 aus einem kompostierbaren Material hergestellt ist.

Somit wurde ein ressourcenschonendes Entsorgungssystem geschaffen, das sowohl die Kosten der Müllbeseitigung reduziert als auch die Hygiene im Küchenbereich und deren Umgebung verbessert.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Verfahren zur Beseitigung von Biomasse (1) mit folgenden Schritten,
- Einsammeln von in Behälter (6) verpackter, feuchtigkeitsreduzierter, insbesondere getrockneter Biomasse (1),
- Transportieren der Behälter (6) zu einer zentralen Verwertungseinrichtung (12),
- Abgeben der Behälter (6) mit der Biomasse (1) an die Verwertungseinrichtung (12).

2. Verfahren nach Anspruch 1, **dadurch gekennzeichnet, dass** in einem Verfahrensschritt vor dem Einsammeln die Biomasse (1) in einer Aufbereitungsvorrichtung (2) über einen einstellbaren, insbesondere längeren Zeitraum getrocknet wird, wobei eine Trocknung der Biomasse (1) vorliegt, wenn sie ca. 10 bis 70 % ihres ursprünglichen Gewichts, vorzugsweise 12 bis 40 %, besonders bevorzugt 15 bis 20 % des ursprünglichen Gewichts aufweist.

3. Verfahren nach einem oder beiden der vorhergehenden Ansprüche, **dadurch gekennzeichnet, dass** die Biomasse (1) vor dem Verpacken in dem Behälter getrocknet beziehungsweise feuchtigkeitsreduziert wird und/oder solange getrocknet wird, bis sie biologisch inaktiv ist und/oder die Trocknung solange erfolgt, bis eine Zersetzung der Biomasse und eine damit verbundene Brennwertreduktion der Biomasse angehalten oder beinahe angehalten ist und/oder die in den Behälter verpackte Biomasse (1) im Behälter (6) getrocknet beziehungsweise feuchtigkeitsreduziert wird und/oder die Biomasse (1) vor dem Einsammeln, bevorzugt in der Aufbereitungsvorrichtung (2) insbesondere von einer Hammermühle oder einem Mahlwerk, bevorzugt zu einer granulatförmigen Masse zerkleinert, wird.

4. Verfahren nach einem oder mehreren der vorhergehenden Ansprüche, **dadurch gekennzeichnet, dass** die Verwertungseinheit (12) eine Biogasanlage ist und/oder die Biomasse (1) in dem Behälter (6) vor Abgabe an die Verwertungseinheit (12) in einer Zerkleinerungseinrichtung (3), z.B. einer Schreddereinrichtung geschreddert wird und/oder die Biomasse (1) vor oder während der Abgabe an die Verwertungseinheit (12) befeuchtet beziehungsweise gewässert wird und/oder eine Transportdiensteinrichtung (10) vorgesehen ist, die die getrocknete Biomasse (1) zu der Verwertungseinrichtung (12) transportiert und/oder ein Paketdienst den Transport zur Verwertungseinrichtung (12) realisiert.

5. Behälter, insbesondere kompostierbarer Behälter (6) zum Sammeln, Transportieren und Verwerten von im Wesentlichen trockener oder zu trocknender Biomasse (1) mit einer Verschlußeinrichtung (9).

6. Behälter nach Anspruch 5, **dadurch gekennzeichnet, dass** der Behälter (6) eine Befestigungseinrichtung (7) zur Befestigung an einer Aufbereitungsvorrichtung (2) von Biomasse (1) aufweist und/oder die Befestigungseinrichtung (7) im wesentlichen eine rechteckige flächige Verstärkung umfasst, an der der Behälter (6) angeordnet ist und/oder der Behälter (6) im Wesentlichen aus kompostierbarer Zellulose hergestellt ist und/oder der Behälter (6) aus einem biologisch abbaubaren Kunststoff, insbesondere auf Stärkebasis, bevorzugt Maisstärkebasis, hergestellt ist.

7. Behälter nach einem oder mehreren der vorhergehenden Ansprüche 5 und 6, **dadurch gekennzeichnet, dass** der Behälter zur Aufnahme der Biomasse (1) sackförmig oder quaderförmig ausgebildet ist und/oder der Behälter (6) ein Volumen zwischen 1 1 und 70 1, vorzugsweise zwischen 10 1 und 50 1 aufweist und/oder die Verschlußeinrichtung (9) einen Deckel umfasst und/oder die Verschlußeinrichtung (9) einen Geruchsverschluß und/oder Geruchsfilter umfaßt.

8. Behälter nach einem oder mehreren der vorhergehenden Ansprüche 5 bis 7 , **dadurch gekennzeichnet, dass** die Verschlußeinrichtung (9) ein, vorzugsweise verrottbares, insbesondere auf Stärke basierendes, Band ist und/oder eine Verstärkunglage (8) am Bodenbereich des Behälters (6) angeordnet ist.

9. Verwendung eines biologisch abbaubaren Behälters (6), insbesondere nach einem der Ansprüche 9 bis 18, als Sammelstelle und Transportbehälter (6) für Biomasse (1).

10. Verwendung, insbesondere nach Anspruch 9 eines biologisch abbaubaren Behälters (6), insbesondere nach einem der Ansprüche 5 bis 8, bevorzugt befüllt mit Biomasse (1) als Abfallprodukt in einer Verwertungseinrichtung (12), insbesondere einer Biogasanlage.

11. Entsorgungssystem mit einer Aufbereitungsvorrichtung für Biomasse und einem biologisch abbaubaren Behälter (6), insbesondere nach einem oder mehreren der Ansprüche 9 bis 20, für einen Transport der Biomasse (1) von der Aufbereitungsvorrichtung (2) zu einer Verwertungseinrichtung (12).

12. Entsorgungssystem nach Anspruch 11, **dadurch gekennzeichnet, dass** die Aufbereitungsvorrichtung (2) die Biomasse (1) mittels einer Trocknungsvorrichtung (4) trocknet und/oder die Verwertungseinrichtung (12) eine Biogasanlage ist und/oder die Verwertungseinrichtung (12) zur Aufbereitungsvorrichtung (2) für die Biomasse räumlich getrennt ist.

13. Entsorgungssystem nach Anspruch 12, **dadurch gekennzeichnet, dass** es eine bevorzugt als Schreddereinrichtung ausgebildete Zerkleinerungseinrichtung (3) umfasst, die im Entsorgungsablauf vor der Verwertungseinrichtung (12) zum Schreddern der Biomasse (1) angeordnet ist und/oder das Entsorgungssystem zur Durchführung des Verfahrens nach einem oder mehreren der Ansprüche 1 bis 4 dient.
